# EUROPÄISCHE PATENTSCHRIFT

(11) **EP 0 556 582 B1**
(45) Veröffentlichungstag und Bekanntmachung des Hinweises auf die Patenterteilung: **29.11.1995**
(21) Anmeldenummer: 93100854.4
(22) Anmeldetag: 21.01.1993
(51) Int. Cl.: H01S 3/109, H01S 3/094, H01S 3/081

(54) **Frequenzverdoppelter Festkörperlaser**
Frequency doubled solid state laser
Laser à l'état solide doublé en fréquence

(30) Priorität: 19.02.1992 DE 4205011
(43) Veröffentlichungstag der Anmeldung: 25.08.1993
(73) Patentinhaber: Carl Zeiss, D-89518 Heidenheim (Brenz) (DE); CARL-ZEISS-STIFTUNG, HANDELND ALS CARL ZEISS, D-89518 Heidenheim (Brenz) (DE)
(72) Erfinder: Sakowski, Harald, W-7089 Lauchheim (DE); Brenner, Karl, W-7080 Aalen-Waldhausen (DE); Greve, Peter, Dr., W-7087 Essingen (DE)

(56) Entgegenhaltungen:
- US-A- 4 710 940
- US-A- 4 841 528
- US-A- 4 951 294
- US-A- 5 084 879
- OPTICS LETTERS. Bd. 14, Nr. 13, 1. Juli 1989, NEW YORK US Seiten 677 - 679 T. E. DIMMICK "Semiconductor-laser-pumped, mode-locked, and frequency- doubled Nd: YAG laser"

## Beschreibung

Die Erfindung betrifft einen frequenzverdoppelten Festkörperlaser mit gefaltetem Resonator der mittels Laserdioden von zwei Enden her gepümpt wird, mit einem Laserstab, einem ersten, zweiten und dritten Resonatorspiegel, einem Frequenzverdoppler-Kristall und zwei Pumplichtquellen mit jeweils mindestens einer Laserdiode, deren Licht durch zwei gegenüberliegende Resonatorspiegel hindurch auf den Laserstab gerichtet ist.

Aus der Patentschrift US 4 951 294, insbesondere Fig. 2 und Anspruch 7 ist ein gattungsgemäßer Festkörperlaser bekannt. Dieser ist speziell für gepulsten Betrieb mit Modelock ausgelegt. Der Frequenzverdoppler-Kristall ist dem Laserstab unmittelbar benachbart oder mit diesem vereinigt. Laserstab, Frequenzverdoppler-Kristall und die beiden gekrümmten Resonatorspiegel müssen dabei für drei Wellenlängen - Pumplicht, Laser-Grundwellenlänge und Harmonische - zugleich optimal reflex- bzw. antireflexbeschichtet werden. Insbesondere bei den gekrümmten Spiegeln sind dabei nur Kompromisse möglich, die bei hohem Herstellaufwand doch erhebliche Lichtverluste nicht verhindern können.

Aus der Patentschrift US 4 710 940, insbesondere Fig. 2a ist ein von beiden Enden durch Laserdioden gepumpter Festkörperlaser ohne Frequenzverdopplung bekannt. Ein dritter Spiegel dient nur zum Auskoppeln des Laserlichts.

Aus der Patentschrift US 4 872 177 ist ein frequenzverdoppelter Festkörperlaser mit gefaltetem Resonator bekannt, der nur von einem Ende her durch Laserdioden gepumpt wird. Der Umlenkspiegel ist konkav.

Es ist die Aufgabe der Erfindung, einen gattungsgemäßen Festkörperlaser anzugeben, der bei vereinfachter Herstellung einen höheren Wirkungsgrad erreicht und der für Dauerstrich- und Impulsbetrieb gleicherweise geeignet ist.

Gelöst wird diese Aufgabe für einen gattungsgemäßen Festkörperlaser mit den kennzeichnenden Merkmalen des Anspruchs 1. Durch die neue Geometrie, bei der der Laserstab und der Frequenzverdoppler-Kristall auf die zwei Arme des gefalteten Resonators verteilt sind, wird nur noch der die Umlenkung im Resonator bewirkende dritte Resonatorspiegel von Licht dreier Wellenlängen berührt und ist dementsprechend schwierig zu verspiegeln bzw. entspiegeln, alle anderen Bauteile, insbesondere der Frequenzverdoppler-Kristall werden nur noch von zwei Wellenlängen berührt, was viel einfacher zu beherrschen ist und das funktionell notwendige Minimum darstellt. Dadurch, daß der dritte Resonatorspiegel durch Aufnahme der Fokussierlinse als Planspiegel ausgeführt werden kann, wird die Divergenz der Lichtwege durch die Ver- und Entspiegelungsschichten stark verringert und damit die Wirksamkeit der Schichten deutlich erhöht.

Vorteilhaft weisen die erste und die zweite Pumplichtquelle jeweils zwei Laserdioden auf, deren Licht mittels polarisierenden Strahlteilern überlagert wird. Diese bekannte und relativ einfache Maßnahme zur Verdopplung der Pumpleistung wird zweckmäßigerweise benutzt bevor im weiteren Schritt die erfindungsgemäße weitere Verdopplung durch beidseitiges Pumpen angewendet wird.

Die den dritten Resonatorspiegel bildende planparallele Platte trägt außer der hochgradigen Verspiegelung für das Licht der zweiten Wellenlänge vom Laserstab vorteilhafterweise beidseitig Antireflex-Schichten für die erste Wellenlänge der Pumplichtquellen und die dritte Wellenlänge des Frequenzverdoppler-Kristalls. Diese Schichten sind für einen bestimmten Winkel ausgelegt, um den der dritte Resonatorspiegel die Achse des Laserstrahls umlenkt. Der Umlenkwinkel beträgt vorzugsweise 10° bis 60°, wobei dann genug Platz für die nebeneinander anzuordnenden Bauelemente bleibt und die Anordnung auch kompakt ist.

Gemäß Anspruch 5 ist es auch möglich, beim erfindungsgemäßen Laser die zweite, nicht verdoppelte Wellenlänge des Laserstabs auszukoppeln und zu nutzen, wenn ein geeignetes bewegliches optisches Element zwischen dem Laserstab und dem Frequenzverdoppler-Kristall angeordnet wird.

Im weiteren wird die Erfindung anhand der Zeichnung näher erläutert.
- Figur 1: zeigt ein konkretes Ausführungsbeispiel des erfindungsgemäßen Festkörperlasers in schematischer Aufsicht;
- Figur 2: zeigt in entsprechender Darstellung eine Variante des erfindungsgemäßen Lasers.

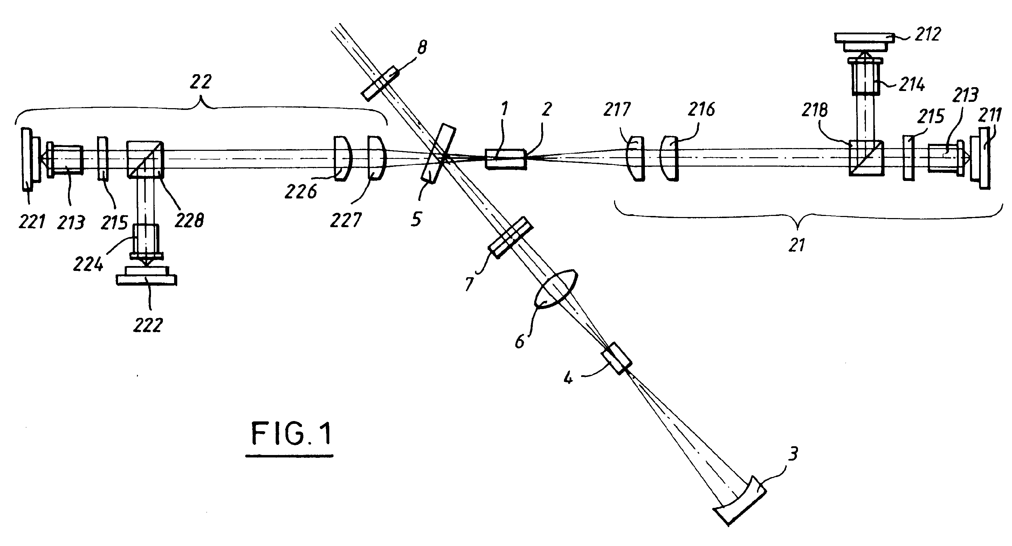

Der Laserstab (1) ist im Ausführungsbeispiel der Fig. 1 ein Nd-YAG-Kristall mit 1,1 at.% Nd-Dotierung von 4 mm Durchmesser und 10 mm Länge Fabrikat Allied Optolase. Auf der Rückseite ist er als Resonatorspiegel (2) mit R = 99,9 % Reflexion für die zweite Wellenlänge λ₂ = 1064 nm des Laserstabs (1) beschichtet. Auf der Vorderseite ist er entspiegelt für λ₂ mit R = 0,01 % Restreflexion. Beide Seiten sind für das Licht der ersten Wellenlänge λ₁ = 808 nm der Pumplichtquellen (21,22), die weiter unten beschrieben werden, entspiegelt mit 0,1 % Restreflexion.

Der zweite Resonatorspiegel (3) ist sphärisch konkav mit 60 mm Radius und für λ₂ und die dritte Wellenlänge λ₃ = 532nm des Frequenzverdoppler-Kristalls (4) mit jeweils R = 99,5 % Reflexion verspiegelt.

Zusammen mit der Linse (6) mit f = 29 mm und beidseitiger Entspiegelung (R < 0,03 %) für λ₂ und λ₃ bewirkt die konkave Form des zweiten Resonatorspiegels (3) eine Fokussierung des Lichts der zweiten Wellenlänge λ₂ auf den Frequenzverdoppler-Kristall (4) aus KTP mit den Abmessungen 2,2 x 2,2 x 4,6 mm³ und beidseitiger Entspiegelung (R < 0,03 %) für λ₂ und λ₃, so daß die Frequenzumwandlung mit hohem Wirkungsgrad erfolgt.

Die Lambda/4-Platte (7), in Nullter Ordnung für λ₂ ausgelegt, ist ebenfalls beidseitig für λ₂ und λ₃ antireflexbeschichtet (R < 0,1 %) und dient der Selektion zweier orthogonal zueinander orientierten Resonator-Moden. Fluktuationen in der Ausgangsleistung werden unterdrückt sowie eine leichte Effizienzsteigerung erzielt.

Der dritte Resonatorspiegel (5) wird unter einem Einfallswinkel von 25° vom Licht des Laserstabs (1) erreicht, so daß die Achse des Resonators an ihm um 50° abgelenkt wird.

Für diese Winkellage ist die planparallele Glasplatte, die den dritten Resonatorspiegel (5) bildet, für λ₂ auf der dem Laserstab (1) zugewandten Seite mit R = 99,5 % verspiegelt.

Für die verdoppelte Wellenlänge λ₃ ist die Glasplatte resonatorseitig mit R ≦ 4% und rückseitig mit R = 0,03 % entspiegelt, so daß der sichtbare Laserstrahl aus dem Frequenzverdoppler-Kristall (4) durch den dritten Resonatorspiegel (5) ausgekoppelt wird.

Erfindungsgemäß wird durch den dritten Resonatorspiegel (5) auch das Pumplicht der zweiten Pumplichtquelle (22) auf eine Endseite des Laserstabs (1) gerichtet. Dazu ist der dritte Resontorspiegel (5) für λ₁ entspiegelt, und zwar rückseitig mit R = 0,33 % und resonatorseitig mit R ≦ 4%.

Da der dritte Resonatorspiegel (5) resonatorseitig drei verschiedene Funktionen bieten muß - hochreflektierend für λ₂, entspiegelt für λ₁ und λ₃ - sind die Werte der Restreflexion (R) hier nicht ganz optimal.

Die Resonatorlänge beträgt ca. 24 mm im Arm mit dem Laserstab (1) und ca. 98 mm im Arm mit dem Frequenzverdoppler-Kristall (4).

Die beiden Pumplichtquellen (21) sind jeweils axial den beiden Enden des Laserstabs (1) gegenüberliegend angeordnet. Sie sind beide völlig gleich aufgebaut und enthalten je eine erste (211,221) und zweite (212,222) Laserdiode, von 3 W Leistung (Type Spektra Diode Labs SDL 2482 PL) mit der Wellenlänge λ₁ = 808 nm. Die erforderlichen Stromversorgungs-, Kühl- und Regeleinrichtungen bekannter Art werden hier nicht weiter beschrieben.

Jeder Laserdiode (211,212,221,222) ist ein Kollimatorsystem (213,214,223,224) zugeordnet. Dies sind Vierlinser mit f = 6,5 mm, NA = 0,5, antireflexbeschichtet mit Transmission 87,3 % bei λ₁. Jeweils eine Lambda/2-Platte (215,225), ausgeführt als Doppelplatte mit Luftspalt und antireflexbeschichtet mit R < 0,25 %, ist im Strahlengang der den polarisierenden Strahlenteiler (218,228) geradlinig durchstrahlenden Laserdiode (211,221) angeordnet.

Der dann überlagerte, parallele und linear polarisierte Pumplichtstrahl hat durch die Charakteristik der Laserdioden (211,212,221,222) einen schmalen rechteckigen Querschnitt, der durch je eine Zylinderlinse (218,226) mit f = 76,2 mm und Antireflexbeschichtung mit R < 0,5 % und je einen Achromaten (217,227) mit f = 30 mm und R < 1 % auf einen dem Modenvolumen angepaßten Bereich im Laserstab (1) fokussiert wird.

Hinter dem Umlenk- und Auskoppelspiegel (5) ist im Ausgangsstrahlengang noch ein Filter (BG40) mit Antireflexbeschichtung für λ₃ mit R < 1 % angeordnet, das im Ausgangsstrahl Störanteile bei den Wellenlängen λ₁ und λ₂ unterdrückt.

Bei dieser beispielhaften Anordnung mit insgesamt 12 W Lichtleistung der vier Laserdioden (211,212,221,222) erreichen nach Verlusten in der Koppeloptik ca. 10,5 W den Laserstab (1), der mehr als 5 W bei λ₂ emittiert. Nach der Frequenzverdopplung wird eine Ausgangsleistung von 1,5 W bei λ₃ = 532 nm erreicht.

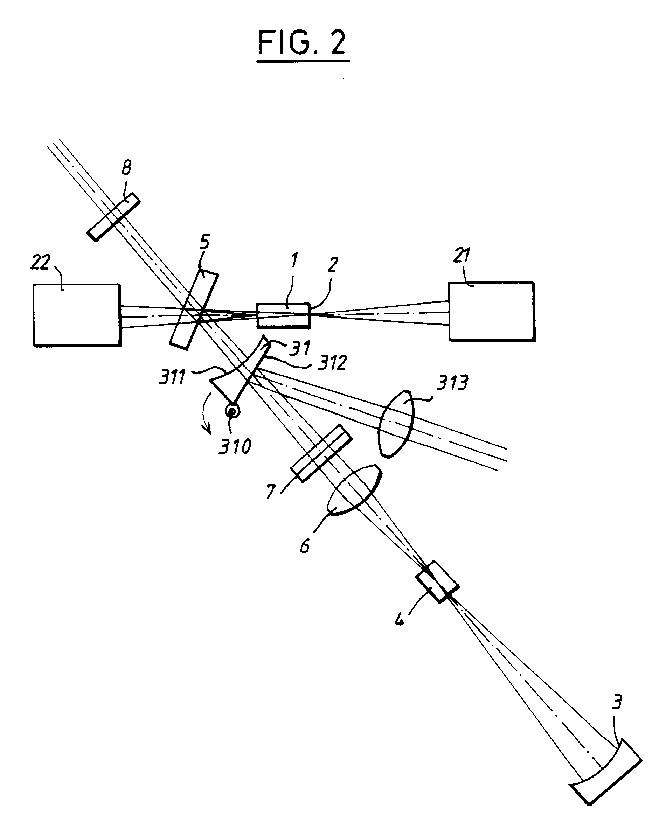

Figur 2 zeigt eine Variante zu dem Laser gemäß Figur 1, die wahlweise für zwei verschiedene Wellenlängen (λ₂ und λ₃) genutzt werden kann. Im gleichen Aufbau wie bei Fig. 1, gleiche Teile sind mit gleichen Bezugszeichen versehen, kann zwischen Laserstab (1) und Frequenzverdoppler-Kristall (4) ein optisches Element (31) vorgesehen werden, das um die Achse (310) drehbar ist und so wahlweise in den Strahlengang des Lasers hinein oder aus diesem heraus gebracht werden kann.

Das optische Element (31) ist auf der dem Laserstab (1) zugewandten Seite als konkaver Resonatorspiegel (311) mit geeignetem Radius und geeigneter Verspiegelung ausgebildet. Der Spiegel (311) ist auf einem transparenten Träger mit schrägliegender polierter und antifreflexbeschichteter Rückfläche (312) aufgebracht, so daß das durch den Spiegel (311) durchtretende Licht seitlich aus der Laseranordnung ausgekoppelt wird, wenn das optische Element (31) in den Strahlengang des Lasers eingeschwenkt ist. Eine Linse (313) und gegebenenfalls weitere optische Elemente dienen zur Strahlformung und -lenkung.

Damit kann also auch der erfindungsgemäße Laser wahlweise mit der zweiten Wellenlänge λ₂ des Laserstabs (1) oder mit der dritten Wellenlängen λ₃ des Frequenzverdoppler-Kristalls (4) im Ausgang genutzt werden, ähnlich wie im Patent US 4 933 945 beschrieben.

Der erfindungsgemäße Laser kann sowohl im Dauerstrich als auch gepulst betrieben werden.

Natürlich sind gegenüber dem darstellten Beispiel weitgehende Abwandlungen im Rahmen der Erfindung möglich. Dazu gehört auch die Verwendung anderer Materialien für Laserstab (1) und Frequenzverdoppler-Kristall (4).

## Patentansprüche

1. Frequenzverdoppelter Festkörperlaser mit gefaltetem Resonator (2, 3, 5), der mitttels Laserdioden (211, 212, 221, 222) von zwei Enden her gepümpt wird, mit
- einem Laserstab (1),
- einem ersten (2), zweiten (3) und dritten (5) Resonatorspiegel,
- einem Frequenzverdoppler-Kristall (4),
- zwei Pumplichtquellen (21, 22) mit jeweils mindestens einer Laserdiode (211, 212, 221, 222), deren Licht durch den ersten und dritten sich gegenüberliegenden Resonatorspiegel (2, 5) hindurch auf den Laserstab (1) gerichtet ist,
dadurch gekennzeichnet, daß
- der Resonator (2, 3, 5) durch den dritten Resonatorspiegel (5) gefaltet ist, der auf einer transparenten Planplatte ausgebildet ist,
- der Frequenzverdoppler-Kristall (4) und der Laserstab (1) in den beiden verschiedenen Armen des gefalteten Resonators (2, 3, 5) liegen, so daß der Frequenzverdoppler-Kristall (4) nicht von Licht der Pumplichtquellen (21, 22) durchdrungen wird,
- im Arm des Resonators (2, 3, 5) mit dem Frequenzverdoppler-Kristall (4) eine Fokussierlinse (6) angeordnet ist.

2. Frequenzverdoppelter Festkörperlaser nach Anspruch 1, dadurch gekennzeichnet, daß die erste und die zweite Pumplichtquelle (21,22) jeweils zwei Laserdioden (211,212;221,222) aufweisen, deren Licht mittels polarisierenden Strahlteilern (218,228) überlagert wird.

3. Frequenzverdoppelter Festkörperlaser nach Anspruch 1 oder Anspruch 2 mit einer ersten Wellenlänge (λ₁) der Pumplichtquellen (21,22), mit einer zweiten Wellenlänge (λ₂) des Laserstabs (1) und mit einer dritten Wellenlänge (λ₃) des Frequenzverdoppler-Kristalls (4), dadurch gekennzeichnet, daß die den dritten Resonatorspiegel (5) tragende transparente planparallele Platte, beidseitig für die erste und dritte Wellenlänge (λ₁,λ₃) entspiegelt und einseitig für die zweite Wellenlänge (λ₂) verspiegelt ist, und daß die anderen optischen Bauteile (1, 2, 3, 4) des Festkörperlasers nur für höchstens zwei Wellenlängen ent- oder verspiegelt sind.

4. Frequenzverdoppelter Festkörperlaser nach mindestens einem der Ansprüche 1 bis 3, dadurch gekennzeichnet, daß durch den dritten Resonatorspiegel (5) die optische Achse des Resonators um 10° bis 60° umgelenkt wird.

5. Frequenzverdoppelter Festkörperlaser nach mindestens einem der Ansprüche 1 bis 4, dadurch gekennzeichnet, daß ein optisches Element (31) mit einem konkaven Spiegel (311) zwischen dem Laserstab (1) und dem Frequenzverdoppler-Kristall (4) beweglich angeordnet ist, so daß das optische Element (31) wahlweise aus dem Strahlengang des Festkörperlasers entfernt oder in diesen eingebracht sein kann, und daß dieses optische Element (31) im eingebrachten Zustand das Licht der zweiten Wellenlänge (λ₂) des Laserstabs (1), also ohne Frequenzverdopplung, aus dem Festkörperlaser auskoppelt.

## Claims

1. Frequency-doubling solid state laser with a folded resonator (2, 3, 5), which is pumped from two ends by laser diodes (211, 212, 221, 222), with
- a laser rod (1)
- a first (2), a second (3) and a third (5) resonator mirror,
- a frequency-doubling crystal (4)
- two pump light sources (21, 22), each containing at least one laser diode (211, 212; 221, 222), whose light is directed onto the laser rod (1) through the first and second opposite resonator mirrors (2, 5), characterized in that
- the resonator (2, 3, 5) is folded by means of the third resonator mirror (5), which is constituted on a transparent plane plate,
- the frequency-doubling crystal (4) and the laser rod (1) are situated in the two different arms of the folded resonator (2, 3, 5), so that the frequency-doubling crystal (4) is not penetrated by light from the pump light sources (21, 22),
- a focussing lens (6) is arranged in the resonator (2, 3, 5) arm with the frequency-doubling crystal (4).

2. Frequency-doubling solid state laser according to claim 1 characterized in that the first and second pump light source (21, 22) each contain two laser diodes (211, 212; 221, 222), whose light is superposed by means of polarizing beam splitters (218,228).

3. Frequency-doubling solid state laser according to claim 1 or claim 2 with a first wavelength (λ₁) of the pump light sources (21, 22), with a second wavelength (λ₂) of the laser rod (1) and with a third wavelength (λ₃) of the frequency-doubling crystal (4), characterized in that the transparent plane parallel plate supporting the third resonator mirror (5) is anti-reflection-coated on both sides for the first and third wavelength (λ₁,λ₃) and is reflection-coated on one side for the second wavelength (λ₂), and that the other optical components (1, 2, 3, 4) of the solid state laser are anti-reflection- or reflection-coated for no more than two wavelengths.

4. Frequency-doubling solid state laser according to at least one of claims 1 to 3, characterized in that the optical axis of the resonator is deviated by means of the third resonator mirror (5) by 10° to 60°.

5. Frequency-doubling solid state laser according to at least one of claims 1 to 4, characterized in that an optical element (31) with a concave mirror (311) is arranged moveably between the laser rod (1) and the frequency-doubling crystal (4) in such a manner, that the optical element can be removed from or entered into the beam path of the solid state laser by choice, and that in the entered position this optical element (31) couples the light of the second wavelength (λ₂) of the laser rod (1), i.e. without frequency doubling, out of the solid state laser.

## Revendications

1. Laser à solides à doublage de fréquence doté d'un résonateur plié (2, 3, 5) qui est pompé par deux diodes laser (211, 212, 221, 222) disposées à deux extrémités, comprenant
- un barreau laser (1),
- un premier (2), un deuxième (3) et un troisième (5) miroir de résonateur,
- un cristal doubleur de fréquence (4),
- deux sources de lumière de pompage (21, 22) comprenant respectivement une diode laser au moins (211, 212, 221, 222) dont la lumière est dirigée sur le barreau laser (1) par l'intermédiaire des premier (2) et troisième (5) miroir qui se font face,
caractérisé en ce que
- le résonateur (2, 3, 5) est plié par le troisième miroir de résonateur (5) qui est appliqué sur une lame transparente à faces parallèles,
- le cristal doubleur de fréquence (4) et le barreau laser (1) sont aménagés dans les deux bras différents du résonateur plié (2, 3, 5), de manière à ce que la lumière provenant des sources de lumière de pompage (21, 22) ne parvienne pas au cristal doubleur de fréquence (4),
- une lentille de focalisation (6) est disposée dans le bras du résonateur (2, 3, 5) comprenant le cristal doubleur de fréquence (4).

2. Laser à solides à doublage de fréquence selon la revendication 1, caractérisé en ce que la première et la seconde source de lumière de pompage (21, 22) comprennent respectivement deux diodes laser (211, 212; 221, 222) dont les rayonnements sont superposés l'un à l'autre par des diviseurs de faisceau polarisants (218, 228).

3. Laser à solides à doublage de fréquence selon la revendication 1 ou 2 présentant une première longueur d'onde (λ₁) des sources de lumière de pompage (21, 22), une deuxième longueur d'onde (λ₂) du barreau laser (1) et une troisième longueur d'onde (λ₃) du cristal doubleur de fréquence (4), caractérisé en ce que la lame transparente à faces parallèles portant le troisième miroir de résonateur (5) est traitée de façon à ce que ses deux faces, dotées d'une couche antiréfléchissante adaptée, transmettent la première et la troisième longueur d'onde (λ₁, λ₃) et à ce qu'une de ses faces réfléchisse la longueur d'onde (λ₂), et que les autres composants optiques (1, 2, 3, 4) du laser à solides sont traités pour transmettre ou réfléchir deux longueurs d'onde tout au plus.

4. Laser à solides à doublage de fréquence selon l'une au moins des revendications 1 à 3, caractérisé en ce que l'axe optique du résonateur est défléchi de 10° à 60° par le troisième miroir de résonateur (5).

5. Laser à solides à doublage de fréquence selon l'une au moins des revendications 1 à 4, caractérisé en ce qu'un élément optique (31) portant un miroir concave (311) est disposé de façon mobile entre le barreau laser (1) et le cristal doubleur de fréquence (4), de telle sorte qu'il peut être retiré du trajet lumineux du laser à solides ou intercalé dans celui-ci et qu'il découple, lorsqu'il est intercalé, la lumière de la deuxième longueur d'onde (λ₂) émise par le barreau laser (1) du laser à solides, celle-ci ne subissant pas de ce fait un doublage de fréquence.
